# EUROPÄISCHE PATENTANMELDUNG

(11) **EP 2 148 079 A2**
(43) Veröffentlichungstag der Anmeldung: **27.01.2010**
(21) Anmeldenummer: 09165888.0
(22) Anmeldetag: 20.07.2009
(51) Int. Cl.: F02M 39/02, F02M 59/10, B60K 6/00

(54) **Antriebsanordnung für ein Kraftfahrzeug, sowie Verfahren zum Betrieb einer Antriebsanordnung für ein Kraftfahrzeug**

(30) Priorität: 22.07.2008 DE 102008040587
(71) Anmelder: ROBERT BOSCH GMBH, 70442 Stuttgart (DE)
(72) Erfinder: Hernier, Markus, 70839, Gerlingen (DE); Greis, Andreas, 70193, Stuttgart (DE)

(57) **Zusammenfassung**

Die Erfindung betrifft eine Antriebsanordnung 1 für ein Kraftfahrzeug und ein Verfahren zum Betrieb einer Antriebsanordnung 1 mit einer Brennkraftmaschine 3, wenigstens einem alternativen Antrieb 4 und einer Kraftstoffhochdruckpumpe 13. Die Brennkraftmaschine 3 und der alternative Antrieb 4 sind durch eine Trennkupplung 6 voneinander trennbar angeordnet und die Kraftstoffhochdruckpumpe 13 ist betriebszustandsabhängig zumindest wahlweise durch den alternativen Antrieb 4 antreibbar, um einen Kraftstoffhochdruck in der Kraftstoffhochdruckpumpe 13 unabhängig vom Betriebszustand der Brennkraftmaschine 3 zu erzeugen.

## Beschreibung

### Antriebsanordnung für ein Kraftfahrzeug, sowie Verfahren zum Betrieb einer Antriebsanordnung für ein Kraftfahrzeug.

Die Erfindung betrifft eine Antriebsanordnung für ein Kraftfahrzeug gemäß dem Oberbegriff des Anspruchs 1 sowie ein Verfahren zum Betrieb einer Antriebsanordnung für ein Kraftfahrzeug gemäß Anspruch 8.

### Stand der Technik

Durch die Einführung elektrischer Hybridantriebe in Antriebsanordnungen für Kraftfahrzeuge und deren Betriebsarten ergeben sich völlig neue Betriebszustände im Fahrzeug. Die Hybridisierung des z. B. klassischen Brennkraftmaschinenantriebsstrangs kann prinzipiell durch beliebige andere Antriebsformen erweitert werden. Dabei setzten sich in der Vergangenheit vor allem elektrische Maschinen durch.

Kommt es schon bei einem Stopp-Start-System für den Fahrzeugstillstand zu einer im Vergleich zum bisherigen Fahrzeugbetrieb steigenden Anzahl von Brennkraftmaschinenstopps, so steigert sich diese Zahl nochmals erheblich für ein Hybridfahrzeug. Dort wird in der Regel die Brennkraftmaschine auch dann deaktiviert, wenn die Fahrt ausschließlich mit dem zweiten Antriebsaggregat bewerkstelligt wird oder wenn das Fahrzeug abgebremst wird.

Für die Einspritzkomponenten des Fahrzeugs, die auf mechanische Weise über die Brennkraftmaschine angetrieben werden, ergeben sich so eine wesentlich höhere Anzahl von Startvorgängen. Bei Diesel-Hochdruckpumpen und dem nachgeschalteten Hochdruckkreislauf kann der Druck dabei von wenigen bar bis auf einige hundert bar in kurzer Zeit ansteigen. Aufgrund der schwankenden Drücke müssen die Komponenten gegebenenfalls mit höherwertigen Werkstoffen hergestellt werden, um die Dauerfestigkeit der Komponenten zu gewährleisten. Da dieses Vorgehen grundsätzlich höhere Kosten nach sich zieht, ist es zielführend nach Alternativen zu suchen, die einerseits einen bestehenden Druck aufrechterhalten und andererseits einen Druckaufbau bei stehender Brennkraftmaschine ermöglichen.

Um den Druckabfall zu minimieren und so die Druckbelastung für den Hochdruckkreislauf zu minimieren, können Hochdruckeinspritzsysteme mit Druckhaltefunktion eingesetzt werden, die den Druck innerhalb des Hochdruckspeichers aufrechterhalten.

Eine Möglichkeit zum Druckaufbau bei stehender Brennkraftmaschine ist in DE 199 39 051 A1 dargestellt. Hier ist eine zusätzliche, schaltbare, vom Verbrennungsmotor unabhängig arbeitende elektrische Pumpe für die Kraftstoffhochdruckerzeugung gezeigt. Nachteilig an der zusätzlichen Pumpe ist der Aufwand sie in das Antriebssystem des Kraftfahrzeugs einzubauen und da es sich um eine vollständige zusätzliche Pumpe handelt, erhöhen sich die Kosten des Gesamtsystems.

### Offenbarung der Erfindung

Die erfindungsgemäße Antriebseinrichtung für ein Kraftfahrzeug mit einer Brennkraftmaschine, wenigstens einem alternativen Antrieb und einer Kraftstoffhochdruckpumpe ermöglicht es auf eine zusätzliche Pumpe zur Kraftstoffhochdruckerzeugung zu verzichten und die daraus resultierenden zusätzlichen Kosten zu minimieren. Die erfindungsgemäße Antriebseinrichtung mit den in Anspruch 1 genannten Merkmalen sieht vor, dass die Brennkraftmaschine und der alternative Antrieb durch eine Trennkupplung voneinander trennbar angeordnet sind und die Kraftstoffhochdruckpumpe betriebszustandsabhängig zumindest wahlweise durch den alternativen Antrieb antreibbar ist. Mit dem alternativen Antrieb steht ein ausreichend leistungsfähiger Antrieb für die Kraftstoffhochdruckpumpe zur Verfügung.

Von Vorteil ist die erfindungsgemäße Anordnung der Brennkraftmaschine und des alternativen Antriebs, die durch eine Trennkupplung voneinander trennbar angeordnet sind. Diese Anordnung der Komponenten auf der Getriebewelle bei der sich die Brennkraftmaschine und der alternative Antrieb mit der gleichen Drehzahl drehen, wird auch paralleler Hybrid genannt. Vorteile sind die mögliche Integration von bereits bewährten Komponenten und ein modularer Aufbau der es ermöglicht, bestehende Antriebsstränge zu hybridisieren. Zudem ist eine Addition der Drehmomente der Brennkraftmaschine und des alternativen Antriebs möglich.

Ein weiterer Vorteil der erfindungsgemäßen Antriebsanordnung ist die Möglichkeit die Kraftstoffhochdruckpumpe betriebszustandsabhängig zumindest wahlweise durch den alternativen Antrieb anzutreiben. Dies ermöglicht einen von der Brennkraftmaschine unabhängigen schnellen Druckaufbau des Kraftstoffs, was zur Folge hat, dass beim Start der Brennkraftmaschine bereits ein hoher Kraftstoffdruck im Hochdruckkreislauf anliegt, woraus eine bessere Zerstäubung des Kraftstoffs erfolgt und von Anfang an eine schadstoffärmere Verbrennung zu erreichen ist. Des Weiteren kann der Druck im Hochdruckkreislauf in Abhängigkeit der Fahrgeschwindigkeit oder der Motorlast der Brennkraftmaschine frühzeitig von dem alternativen Antrieb erzeugt werden. Bei fahrendem Fahrzeug und laufendem alternativen Antrieb könnte der Druck auch während alternativer, insbesondere elektrischer Fahrphasen gehalten werden, wodurch sich die zusätzliche Belastung der Hochdruckkomponenten durch Druckschwankungen reduziert und die Lebensdauer der Komponenten erhöht werden kann. Von Vorteil ist die Möglichkeit bestehende Kraftstoffhochdruckpumpen für den Einsatz in Hybridfahrzeugen zu verwenden, was Kosten für die Neuentwicklung oder Anpassung reduziert.

Um die Kraftstoffhochdruckpumpe unabhängig von der Brennkraftmaschine betreiben zu können, ist sie in den Ausführungsformen der Erfindung nur mittelbar durch die Brennkraftmaschine antreibbar. Durch den separaten Einbau der Kraftstoffhochdruckpumpe lässt sich durch den Wegfall des Pumpenantriebs eine aufwendige Anordnung an der Brennkraftmaschine vermeiden, wodurch eine Entfeinerung der Brennkraftmaschine stattfindet, Fehlermöglichkeiten reduziert werden und die Kraftstoffhochdruckpumpe zusätzlich unabhängig von der Drehzahl der Brennkraftmaschine betrieben werden kann.

Die Drehmomentenübertragung von der Brennkraftmaschine und/oder dem alternativen Antrieb auf die Kraftstoffhochdruckpumpe findet durch mindestens ein Übertragungsmittel der Antriebsanordnung statt. Die Übertragungsmittel haben den Vorteil, dass verschiedene Übersetzungsverhältnisse zwischen der Getriebewelle und der Welle der Kraftstoffhochdruckpumpe möglich sind und je nach Ausführungsform der Übertragungsmittel sind störende mechanische Einflüsse der Antriebsanordnung aufnehmbar.

In einer Ausführungsform der Erfindung ist die Kraftstoffhochdruckpumpe durch eine erste Kupplung zum alternativen Antrieb und/oder durch eine zweite Kupplung zur Brennkraftmaschine koppelbar. Ein Vorteil der Kupplungen ist der variable Betrieb der Kraftstoffhochdruckpumpe.

Vorteilhafterweise werden die Kupplungen automatisch über eine Steuereinrichtung angesteuert. Die Steuereinrichtung gewährleistet ein schnelles Öffnen und Schließen der Kupplungen und sorgt für den optimalen Betrieb der Antriebsanordnung.

Der alternative Antrieb ist bevorzugt eine elektrische Maschine. Ein Vorteil der elektrischen Maschine ist beispielsweise das hohe Drehmoment bei niedriger Drehzahl, das sich bei der erfindungsgemäßen Antriebsanordnung positiv auf die Fahreigenschaften des Kraftfahrzeugs auswirkt. Es können jedoch auch anderer Antriebe eingesetzt werden, die den Antrieb des Fahrzeuges erlauben.

Die Übertragungsmittel der Antriebsanordnung, durch die die Kraftstoffhochdruckpumpe antreibbar ist, umfassen Zahnräder und/oder Riemen. Zahnräder haben den Vorteil, dass sie für die zu übertragenden Kräfte kompakte Ausmaße aufweisen und Riemen dämpfen gut auftretende Schwingungen.

Durch ein Verfahren zum Betrieb einer Antriebsanordnung für ein Kraftfahrzeug mit einer Brennkraftmaschine, wenigstens einem alternativen Antrieb und einer Kraftstoffhochdruckpumpe, wobei die Brennkraftmaschine und der alternative Antrieb durch eine Trennkupplung voneinander trennbar angeordnet sind und die Kraftstoffhochdruckpumpe betriebszustandsabhängig zumindest wahlweise durch den alternativen Antrieb angetrieben werden kann und einen Kraftstoffhochdruck erzeugt, können die oben genannten erfindungsgemäßen Vorteile auch erreicht werden. Dabei ist es von Vorteil, dass die Kraftstoffhochdruckpumpe nur mittelbar von der Brennkraftmaschine angetrieben wird und somit unabhängig von der Drehzahl der Brennkraftmaschine ist. Ein weiterer Vorteil ist, dass die Trennkupplung, bei ausschließlich alternativer Antriebsweise, die Brennkraftmaschine abkuppeln kann und diese nicht mitgeschleppt werden muss, wodurch der Wirkungsgrad der Antriebsanordnung gesteigert und die Reichweite des Kraftfahrzeugs erhöht werden können.

In einer Ausführungsform des Verfahrens zum Betrieb der Antriebsanordnung weist diese ein erstes und ein zweites Übertragungsmittel auf, sowie eine erste und eine zweite Kupplung. Das erste Übertragungsmittel ist zwischen der Trennkupplung und dem alternativen Antrieb angeordnet und die erste Kupplung ist zwischen dem ersten Übertragungsmittel und der Kraftstoffhochdruckpumpe angeordnet. Das zweite Übertragungsmittel ist zwischen der Trennkupplung und der Brennkraftmaschine angeordnet und die zweite Kupplung ist zwischen dem zweiten Übertragungsmittel und der Kraftstoffhochdruckpumpe angeordnet. Die erste und die zweite Kupplung werden über eine Steuereinrichtung angesteuert und die Kraftstoffhochdruckpumpe kann wahlweise über den alternativen Antrieb und/oder über die Brennkraftmaschine angetrieben werden. Ein Vorteil dieser Ausführungsform ist die variable Ansteuerung der Kupplungen. Beispielsweise kann beim Anfahren des Kraftfahrzeugs über den alternativen Antrieb die Kraftstoffhochdruckpumpe bereits angesteuert und resultierend ein Kraftstoffhochdruck erzeugt werden. Beim Starten der Brennkraftmaschine liegt somit bereits ein Kraftstoffhochdruck im Einspritzsystem an und eine optimierte Verbrennung ist schon beim Start möglich. Ein weiteres Beispiel ist der Betrieb der Kraftstoffhochdruckpumpe bei laufender Brennkraftmaschine. Hier kann die Ansteuerung vorteilhaft ausschließlich über die Brennkraftmaschine geschehen. Ferner gibt es beispielsweise die Möglichkeit bei laufendem alternativen Antrieb den Kraftstoffdruck hoch zu halten, um eine zusätzliche Belastung der Hochdruckkomponenten durch schwankende Drücke zu vermeiden, was die Lebensdauer dieser Komponenten erhöhen kann.

In einer weiteren Ausführungsform des Verfahrens zum Betrieb der Antriebsanordnung weist diese ein Übertragungsmittel auf, das zwischen der Trennkupplung und dem alternativen Antrieb angeordnet ist. Zwischen dem Übertragungsmittel und der Kraftstoffhochdruckpumpe ist zusätzlich eine Kupplung angeordnet, die über eine Steuereinrichtung angesteuert wird. Die Kraftstoffhochdruckpumpe wird wahlweise über den alternativen Antrieb und/oder über die Brennkraftmaschine angetrieben. Ein Vorteil dieser Ausführungsform ist die variable Ansteuerung der Kupplung. Beispielsweise kann die Kraftstoffhochdruckpumpe bei Fahrt mit ausschließlich alternativem Antrieb entkoppelt werden und tritt somit nicht als Verbraucher auf. Je nach Betriebszustand kann die Kupplung durch die Steuereinrichtung geschlossen werden und ein Kraftstoffhochdruck wird erzeugt. Dies erfolgt beispielsweise kurz vor dem Start der Brennkraftmaschine.

In einer weiteren Ausführungsform des Verfahrens zum Betrieb der Antriebsanordnung weist diese ein Übertragungsmittel auf, wobei das Übertragungsmittel zwischen der Trennkupplung und dem alternativen Antrieb angeordnet ist und die Kraftstoffhochdruckpumpe ständig über den alternativen Antrieb angetrieben wird. Besonders im Niedrigpreissegment ergeben sich Vorteile dieser Ausführungsform, weil die Antriebsanordnung einfach aufgebaut ist und auf Kupplungen zum Abkuppeln der Kraftstoffhochdruckpumpe verzichtet wird.

Weitere Vorteile und vorteilhafte Ausgestaltungen ergeben sich aus der Beschreibung und der nachfolgenden Zeichnung.

### Kurze Beschreibung der Zeichnung

Ausführungsformen der Erfindung sind in der Zeichnung dargestellt und in der nachfolgenden Beschreibung näher erläutert.

Es zeigen:
Figur 1: ein Prinzipschaltbild einer ersten Ausführungsform einer erfindungsgemäßen Antriebsanordnung eines Antriebssystems;
Figur 2: einen Ausschnitt eines Antriebssystems mit einem Prinzipschaltbild einer zweiten Ausführungsform der erfindungsgemäßen Antriebsanordnung;
Figur 3: einen Ausschnitt eines Antriebssystems mit einem Prinzipschaltbild einer dritten Ausführungsform der erfindungsgemäßen Antriebsanordnung.

### Ausführungsformen der Erfindung

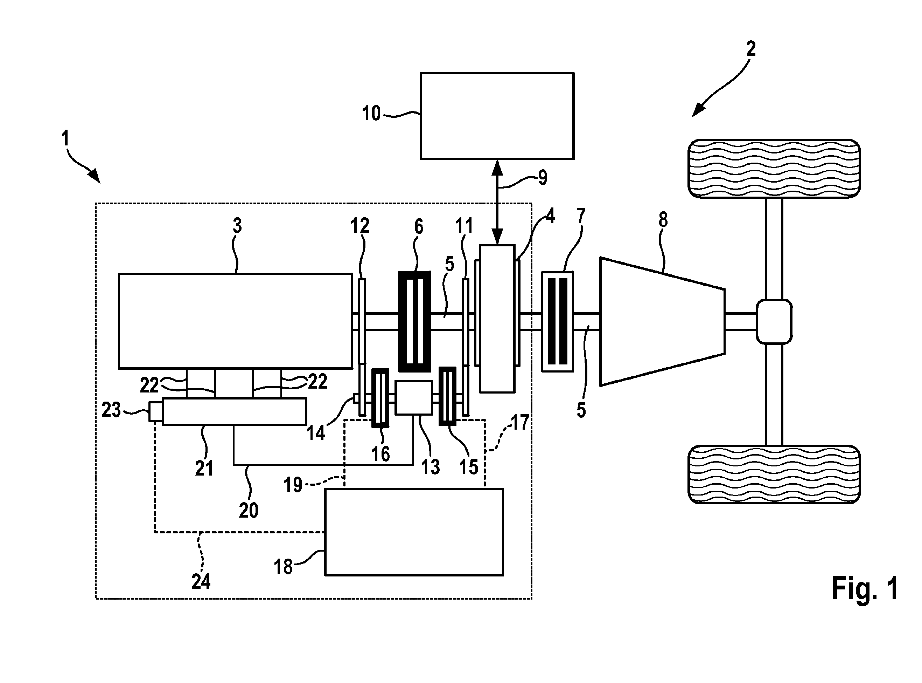

Das in Fig. 1 dargestellte Prinzipschaltbild zeigt einen Aufbau einer ersten Ausführungsform einer erfindungsgemäßen Antriebsanordnung 1 eines Antriebssystems 2. Die Antriebsanordnung 1 beinhaltet im Wesentlichen eine Brennkraftmaschine 3 und einen alternativen Antrieb 4, die auf einer Getriebewelle 5 angeordnet sind und zwischen denen ebenfalls auf der Getriebewelle 5 eine Trennkupplung 6 angeordnet ist. Die Trennkupplung 6 dient beispielsweise beim Fahren mit dem alternativen Antrieb 4, beim Segeln bzw. Verzögern des Fahrzeuges dazu, die Brennkraftmaschine 3 zu entkoppeln. Die Getriebewelle 5 besteht aus mehreren Teilstücken, wird allerdings zur Vereinfachung im weiteren Verlauf der Ausführung als eine Getriebewelle 5 betrachtet. Auf der alternativen Antriebsseite 4 der Antriebsanordnung 1 sind auf der Getriebewelle 5 eine Getriebekupplung 7 und darauf folgend ein Getriebe 8 eines nicht dargestellten Kraftfahrzeugs angeordnet. Die Getriebekupplung 7 zwischen dem Getriebe 8 und dem alternativen Antrieb 4 kommt beim Schaltprozess des Kraftfahrzeugs zum Einsatz. Der alternative Antrieb 4 ist in dieser Ausführungsform eine elektrische Maschine, die durch eine schematisch als beidseitigen Pfeil dargestellte Übertragungsleitung 9 mit einem Energiespeicher 10 verbunden ist. Der Energiespeicher 10 ist beispielsweise eine Hochvoltbatterie, die in Abhängigkeit der Fahrsituation entweder Energie abgibt oder aufnimmt. In dem Fall, dass der alternative Antrieb 4 eine elektrische Maschine ist, gibt diese Energie ab und treibt das Kraftfahrzeug an. Im Generatorbetrieb nimmt die elektrische Maschine Energie auf und lädt beispielsweise den Energiespeicher 10 auf. Letzteres tritt zum Beispiel im Fall der Verzögerung des Fahrzeugs auf. Des Weiteren weist die Antriebsanordnung 1 ein erstes und ein zweites Übertragungsmittel 11, 12 auf, durch die eine Kraftstoffhochdruckpumpe 13 angetrieben werden kann, die in diesem Ausführungsbeispiel parallel zur Getriebewelle 5 angeordnet ist. Die Übertragungsmittel 11, 12 sind beispielsweise Zahnräder, die ein Drehmoment von der Getriebewelle 5 auf eine Welle 14 der Kraftstoffhochdruckpumpe 13 übertragen. Es ist auch möglich die Übertragungsmittel 11, 12 aus Riemen, Zahnrippenriemen oder Ketten zu bilden. Das erste Übertragungsmittel 11 ist zwischen der Trennkupplung 6 und dem alternativen Antrieb 4 angeordnet, kann aber bei Bedarf auch zwischen dem alternativen Antrieb 4 und der Getriebekupplung 7 angeordnet sein. Das zweite Übertragungsmittel 12 ist zwischen der Trennkupplung 6 und der Brennkraftmaschine 3 angeordnet. Zusätzlich sind zwischen der Kraftstoffhochdruckpumpe 13 und den beiden Übertragungsmitteln 11, 12 eine erste und eine zweite Kupplung 15, 16 angeordnet. Die erste Kupplung 15 ist zwischen der Kraftstoffhochdruckpumpe 13 und dem ersten Übertragungsmittel 11 auf der Seite des alternativen Antriebs 4 angeordnet und die zweite Kupplung 16 zwischen der Kraftstoffhochdruckpumpe 13 und dem zweiten Übertragungsmittel 12 auf der Seite der Brennkraftmaschine 3. Die erste Kupplung 15 ist über eine erste Signalleitung 17 mit einer Steuereinrichtung 18 verbunden und die zweite Kupplung 16 über eine zweite Signalleitung 19 mit der Steuereinrichtung 18. Die Kraftstoffhochdruckpumpe 13 ist durch eine Kraftstoffleitung 20 mit einem Hochdruckspeicher 21 verbunden, in dem Kraftstoff unter Hochdruck von der Kraftstoffhochdruckpumpe 13 zum Hochdruckspeicher 21 gefördert wird. Am Hochdruckspeicher 21, der beispielsweise ein Common-Rail-System ist, sind in dieser Ausführungsform vier Injektoren 22 angeordnet, die mit der Brennkraftmaschine 3 verbunden sind. Die Anzahl der Injektoren 22 wird je nach Aufbau der Brennkraftmaschine 3 bestimmt. Der Kraftstoff wird aus dem Hochdruckspeicher 21 über die Injektoren 22 in den nicht dargestellten Zylinderkopf der Brennkraftmaschine 3 gefördert. An dem Hochdruckspeicher 21 ist ein Drucksensor 23 angeordnet, der über eine Signalleitung 24 mit der Steuereinrichtung 18 verbunden ist.

Die erste Ausführungsform der Antriebsanordnung 1 ermöglicht beispielsweise die im Folgenden aufgeführten Betriebsarten der Kraftstoffhochdruckpumpe 13. Vorraussetzung für den Betrieb der Kraftstoffhochdruckpumpe 13 ist eine durch die Brennkraftmaschine 3 und/oder den alternativen Antrieb 4 angetriebene Getriebewelle 5, die über die Übertragungsmittel 11, 12 ein Drehmoment auf die Welle 14 der Kraftstoffhochdruckpumpe 13 überträgt. Die Steuereinrichtung 18 steuert betriebszustandsabhängig über die erste und die zweite Signalleitung 17, 19 die erste und die zweite Kupplung 15, 16. Dabei wertet die Steuereinrichtung 18 eingehende Parameter aus, zum Beispiel Parameter des Drucksensors 23 am Hochdruckspeicher 21 und steuert betriebszustandsabhängig wann die Kraftstoffhochdruckpumpe 13 durch die Brennkraftmaschine 3 oder den alternativen Antrieb 4 angetrieben werden soll. Eine aktive Brennkraftmaschine 3 wird im Folgenden als laufende Brennkraftmaschine 3 bezeichnet und eine deaktivierte, bzw. vom alternativen Antrieb 4 mitgeschleppte Brennkraftmaschine 3 als ausgeschaltete Brennkraftmaschine 3.
- Bei laufender Brennkraftmaschine 3 und geschlossener Trennkupplung 6 ist die erste Kupplung 15 geöffnet und die zweite Kupplung 16 geschlossen. Die zweite Kupplung 16 überträgt ein Drehmoment auf die Kraftstoffhochdruckpumpe 13 und treibt diese an.
- Bei laufender Brennkraftmaschine 3 und geschlossener Trennkupplung 6 ist die zweite Kupplung 16 geöffnet und die erste Kupplung 15 geschlossen. Die erste Kupplung 15 überträgt ein Drehmoment auf die Kraftstoffhochdruckpumpe 13 und treibt diese an.
- Bei ausgeschalteter Brennkraftmaschine 3 und geschlossener Trennkupplung 6 ist die zweite Kupplung 16 geöffnet und die erste Kupplung 15 geschlossen. Die erste Kupplung 15 überträgt ein Drehmoment auf die Kraftstoffhochdruckpumpe 13 und treibt diese an.
- Bei ausgeschalteter Brennkraftmaschine 3 und geöffneter Trennkupplung 6 ist die zweite Kupplung 16 geöffnet und die erste Kupplung 15 geschlossen. Die erste Kupplung 15 überträgt ein Drehmoment auf die Kraftstoffhochdruckpumpe 13 und treibt diese an.
- Bei ausgeschalteter Brennkraftmaschine 3 und geschlossener Trennkupplung 6 sind beide Kupplungen 15, 16 geöffnet und die Kraftstoffhochdruckpumpe 13 wird nicht angetrieben.
- Bei ausgeschalteter Brennkraftmaschine 3 und geöffneter Trennkupplung 6 sind beide Kupplungen 15, 16 geöffnet und die Kraftstoffhochdruckpumpe 13 wird nicht angetrieben.

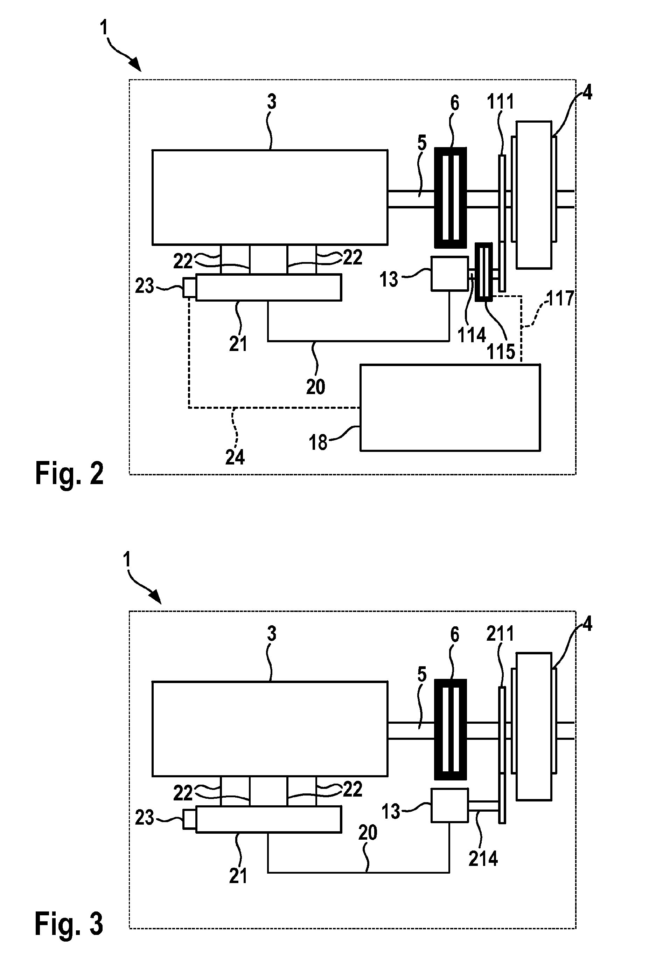

Fig. 2 zeigt einen Ausschnitt eines Antriebssystems 2 mit einem Prinzipschaltbild einer zweiten Ausführungsform der erfindungsgemäßen Antriebsanordnung 1. Der Aufbau dieser Ausführungsform der Antriebsanordnung 1 besteht im Wesentlichen wie die erste Ausführungsform aus einer Brennkraftmaschine 3, die auf einer Getriebewelle 5 angeordnet ist und über eine Trennkupplung 6 mit einem alternativen Antrieb 4 koppelbar ist. Schnittstellen zum alternativen Antrieb 4, wie sie in Fig. 1 beispielsweise durch eine Übertragungsleitung 9 und eine Trennkupplung 6 auf der Getriebewelle 5 dargestellt sind, sind zur Vereinfachung in dieser Figur nicht gezeigt. Auf der Getriebewelle 5 ist zwischen der Trennkupplung 6 und dem alternativen Antrieb 4 ein Übertragungsmittel 111 angeordnet, dass dem in Fig. 1 beschriebenen Übertragungsmittel 11 entspricht. Eine zur Getriebewelle 5 parallel angeordnete Kraftstoffhochdruckpumpe 13 weist eine Welle 114 auf, auf der zwischen der Kraftstoffhochdruckpumpe 13 und dem Übertragungsmittel 111 eine Kupplung 115 angeordnet ist. Die Kupplung 115 ist über eine Signalleitung 117 mit einer Steuereinrichtung 18 verbunden. Die Kraftstoffhochdruckpumpe 13 ist durch eine Kraftstoffleitung 20 mit einem Hochdruckspeicher 21 verbunden, in dem Kraftstoff unter Hochdruck von der Kraftstoffhochdruckpumpe 13 zum Hochdruckspeicher 21 gefördert wird. Am Hochdruckspeicher 21 sind in dieser Ausführungsform vier Injektoren 22 angeordnet, die mit der Brennkraftmaschine 3 verbunden sind. An dem Hochdruckspeicher 21 ist ein Drucksensor 23 angeordnet, der über eine Signalleitung 24 mit der Steuereinrichtung 18 verbunden ist.

Diese Ausführungsform kommt beispielsweise zum Einsatz, wenn die Brennkraftmaschine 3 ausschließlich zum Antreiben des Fahrzeugs dient und keine direkte Versorgung von Nebenaggregaten zur Aufgabe hat. Folgende Betriebsarten der Kraftstoffhochdruckpumpe 13 werden durch die zweite Ausführungsform der Antriebsanordnung 1 beispielsweise ermöglicht. Dies setzt voraus, dass für den Betrieb der Kraftstoffhochdruckpumpe 13, eine durch die Brennkraftmaschine 3 und/oder den alternativen Antrieb 4 angetriebene Getriebewelle 5, über das Übertragungsmittel 111 ein Drehmoment auf die Welle 114 der Kraftstoffhochdruckpumpe 13 überträgt und die Steuereinrichtung 18 über die Signalleitung 117 die Kupplung 115 steuert. Dabei wertet die Steuereinrichtung 18 eingehende Parameter aus, zum Beispiel Parameter des Drucksensors 23 am Hochdruckspeicher 21 und steuert betriebszustandsabhängig wann und wie die Kraftstoffhochdruckpumpe 13 angetrieben werden soll.
- Bei laufender Brennkraftmaschine 3 und geschlossener Trennkupplung 6 ist die Kupplung 115 geschlossen, überträgt ein Drehmoment auf die Kraftstoffhochdruckpumpe 13 und treibt diese an.
- Bei ausgeschalteter Brennkraftmaschine 3 und geschlossener Trennkupplung 6 ist die Kupplung 115 geschlossen, überträgt ein Drehmoment auf die Kraftstoffhochdruckpumpe 13 und treibt diese an.
- Bei ausgeschalteter Brennkraftmaschine 3 und geöffneter Trennkupplung 6 ist die Kupplung 115 geschlossen, überträgt ein Drehmoment auf die Kraftstoffhochdruckpumpe 13 und treibt diese an.
- Bei ausgeschalteter Brennkraftmaschine 3 und geschlossener Trennkupplung 6 ist die Kupplung 115 geöffnet und die Kraftstoffhochdruckpumpe 13 wird nicht angetrieben.
- Bei ausgeschalteter Brennkraftmaschine 3 und geöffneter Trennkupplung 6 ist die Kupplung 115 geöffnet und die Kraftstoffhochdruckpumpe 13 wird nicht angetrieben.

Fig. 3 zeigt einen Ausschnitt eines Antriebssystems 2 mit einem Prinzipschaltbild einer dritten Ausführungsform der erfindungsgemäßen Antriebsanordnung 1. Der Aufbau dieser Ausführungsform der Antriebsanordnung 1 besteht im Wesentlichen wie die erste und die zweite Ausführungsform aus einer Brennkraftmaschine 3, die auf einer Getriebewelle 5 angeordnet ist und über eine Trennkupplung 6 mit einem alternativen Antrieb 4 koppelbar ist. Schnittstellen zum alternativen Antrieb 4, wie sie in Fig. 1 beispielsweise durch eine Übertragungsleitung 9 und eine Trennkupplung 6 auf der Getriebewelle 5 dargestellt sind, sind zur Vereinfachung in dieser Figur nicht gezeigt. Auf der Getriebewelle 5 ist zwischen der Trennkupplung 6 und dem alternativen Antrieb 4 ein Übertragungsmittel 211 angeordnet, dass dem in Fig. 1 beschriebenen Übertragungsmittel 11 entspricht. Eine zur Getriebewelle 5 parallel angeordnete Kraftstoffhochdruckpumpe 13 weist eine Welle 214 auf, auf der das Übertragungsmittel 211 angeordnet ist. Diese Ausführungsform ist für den Fall, dass die Kraftstoffhochdruckpumpe 13 im Betrieb immer mitlaufen soll und nicht von der Getriebewelle 5 entkoppelt werden soll. Die Kraftstoffhochdruckpumpe 13 ist durch eine Kraftstoffleitung 20 mit einem Hochdruckspeicher 21 verbunden, in dem Kraftstoff unter Hochdruck von der Kraftstoffhochdruckpumpe 13 zum Hochdruckspeicher 21 gefördert wird. Am Hochdruckspeicher 21 sind in dieser Ausführungsform vier Injektoren 22 angeordnet, die mit der Brennkraftmaschine 3 verbunden sind.

Die dritte Ausführungsform der Antriebsanordnung 1 ermöglicht beispielsweise die im Folgenden aufgeführten Betriebsarten der Kraftstoffhochdruckpumpe 13. Vorraussetzung für den Betrieb der Kraftstoffhochdruckpumpe 13 ist eine durch die Brennkraftmaschine 3 und/oder den alternativen Antrieb 4 angetriebene Getriebewelle 5, die über das Übertragungsmittel 211 ein Drehmoment auf die Welle 214 der Kraftstoffhochdruckpumpe 13 überträgt.
- Bei laufender Brennkraftmaschine 3 und geschlossener Trennkupplung 6, wird ein Drehmoment auf die Kraftstoffhochdruckpumpe 13 übertragen und treibt diese an.
- Bei ausgeschalteter Brennkraftmaschine 3 und geschlossener Trennkupplung 6 wird ein Drehmoment auf die Kraftstoffhochdruckpumpe 13 übertragen und treibt diese an.
- Bei ausgeschalteter Brennkraftmaschine 3 und geöffneter Trennkupplung 6 wird ein Drehmoment auf die Kraftstoffhochdruckpumpe 13 übertragen und treibt diese an.

Die beschriebenen drei Ausführungsformen der Antriebsanordnung 1 können bevorzugt in hybridangetriebenen Kraftfahrzeugen, insbesondere den sogenannten Parallel-Hybriden, zum Einsatz kommen. Die Parallel-Hybride sind **dadurch gekennzeichnet, dass** die Brennkraftmaschine 3 und der alternative Antrieb 4, bevorzugt gebildet aus einer elektrische Maschine, auf der Getriebewelle 5 angeordnet sind und parallel für den Antrieb genutzt werden können. Diese Konfiguration besitzt im Vergleich zu konventionellen Antriebssträngen eine erhöhte Flexibilität bezüglich der Betriebspunktoptimierung. Für praktische Ausführungen eines Parallel-Hybriden ist es außerdem kennzeichnend, dass das Drehzahlverhältnis zwischen Brennkraftmaschine 3 und alternativen Antrieb 4 fixiert, das heißt ein festes, gegebenenfalls durch ein Stufengetriebe schaltbares Übersetzungsverhältnis, ist.

Die in den Ausführungsformen beschriebenen Betriebszustände sind beispielsweise das Fahren, Anfahren, Boosten, Segeln, Bremsen und die Start-Stopp Funktion. Dabei steuert die Steuereinrichtung 18 nach Verarbeiten von eingehenden Parametern automatisch, welcher Betriebszustand zu bevorzugen ist. Eingehende Parameter sind beispielsweise der Kraftstoffdruck im Hochdruckspeicher 21, der Ladezustand des Energiespeichers 10 und weitere. Beim Fahren wird das Kraftfahrzeug zum Beispiel allein durch die Brennkraftmaschine 3 angetrieben, wobei der alternative Antrieb 4 entweder ohne Funktion mitgeschleppt wird oder alternativ als Generator den Energiespeicher 10 auflädt. Das Fahren kann auch allein durch den alternativen Antrieb 4 erfolgen oder gleichzeitig durch die Brennkraftmaschine 3 und den alternativen Antrieb 4, wobei sich die jeweils erzeugten Drehmomente auf der Getriebewelle 5 addieren. Das Anfahren erfolgt je nach Bedarfsfall analog wie beim Fahren. Beim Boosten treiben die Brennkraftmaschine 3 und der alternative Antrieb 4 gleichzeitig das Kraftfahrzeug an. Segeln tritt auf, wenn das Kraftfahrzeug beispielsweise einen Berg hinunterrollt und die Brennkraftmaschine 3 und/oder der alternative Antrieb 4 mitgeschleppt werden. Dabei kann über den alternativen Antrieb 4 Energie rekuperiert werden. Auch beim Bremsen kann Energie über den alternativen Antrieb 4 rekuperiert werden, indem beispielsweise die elektrische Maschine als Generator arbeitet, Bewegungsenergie in elektrische Energie umwandelt und mit dieser den Energiespeicher 10 auflädt. Die Start-Stopp-Funktion findet bevorzugt im Stadtverkehr Anwendung. Beim Halten des Kraftfahrzeugs wird die Brennkraftmaschine 3 deaktiviert und beim Anfahren wieder gestartet.

Die dargestellten Ausführungsformen der Erfindung beziehen sich auf Antriebsanordnungen 1 mit Brennkraftmaschinen 3, in denen Kraftstoff unter Hochdruck in die Hochdrucksysteme der Brennkraftmaschine 3 zugeführt wird. Die Brennkraftmaschinen 3 können bevorzugt Dieselmotoren sein oder andere direkteinspritzende Motoren mit Hochdruckpumpen, wie zum Beispiel benzindirekteinspritzende Ottomotoren (BDE-Ottomotoren).

## Patentansprüche

1. Antriebsanordnung (1) für ein Kraftfahrzeug mit einer Brennkraftmaschine (3), wenigstens einem alternativen Antrieb (4) und einer Kraftstoffhochdruckpumpe (13), **dadurch gekennzeichnet, dass** die Brennkraftmaschine (3) und der alternative Antrieb (4) durch eine Trennkupplung (6) voneinander trennbar angeordnet sind und die Kraftstoffhochdruckpumpe (13) betriebszustandsabhängig zumindest wahlweise durch den alternativen Antrieb (4) antreibbar ist.

2. Antriebsanordnung (1) nach Anspruch 1, **dadurch gekennzeichnet, dass** die Kraftstoffhochdruckpumpe (13) nur mittelbar durch die Brennkraftmaschine (3) antreibbar ist.

3. Antriebsanordnung (1) nach einem der vorangehenden Ansprüche, **dadurch gekennzeichnet, dass** die Kraftstoffhochdruckpumpe (13) durch mindestens ein Übertragungsmittel (11, 111, 211, 12) der Antriebsanordnung (1) antreibbar ist.

4. Antriebsanordnung (1) nach einem der vorangehenden Ansprüche, **dadurch gekennzeichnet, dass** die Kraftstoffhochdruckpumpe (13) durch eine erste Kupplung (15, 115) zum alternativen Antrieb (4) und/oder durch eine zweite Kupplung (16) zur Brennkraftmaschine (3) koppelbar ist.

5. Antriebsanordnung (1) nach Anspruch 4, **dadurch gekennzeichnet, dass** die erste Kupplung (15, 115) und/oder die zweite Kupplung (16) durch eine Steuereinrichtung (18) steuerbar sind.

6. Antriebsanordnung (1) nach Anspruch 1, **dadurch gekennzeichnet, dass** der alternative Antrieb (4) eine elektrischen Maschine ist.

7. Antriebsanordnung (1) nach Anspruch 3, **dadurch gekennzeichnet, dass** das Übertragungsmittel (11, 111, 211, 12) Zahnräder und/oder Riemen umfasst.

8. Verfahren zum Betrieb einer Antriebsanordnung (1) für ein Kraftfahrzeug mit einer Brennkraftmaschine (3), wenigstens einem alternativen Antrieb (4) und einer Kraftstoffhochdruckpumpe (13), **dadurch gekennzeichnet, dass** die Brennkraftmaschine (3) und der alternative Antrieb (4) durch eine Trennkupplung (6) voneinander trennbar angeordnet sind und die Kraftstoffhochdruckpumpe (13) betriebszustandsabhängig zumindest wahlweise durch den alternativen Antrieb (4) angetrieben wird und einen Kraftstoffhochdruck erzeugt.

9. Verfahren nach Anspruch 8, **dadurch gekennzeichnet, dass** die Kraftstoffhochdruckpumpe (13) nur mittelbar von der Brennkraftmaschine (3) angetrieben wird.

10. Verfahren nach Anspruch 8 oder 9, **dadurch gekennzeichnet, dass** die Antriebsanordnung (1) ein erstes und ein zweites Übertragungsmittel (11, 12) aufweist,
- dass das erste Übertragungsmittel (11) zwischen der Trennkupplung (6) und dem alternativen Antrieb (4) angeordnet ist und zwischen dem ersten Übertragungsmittel (11) und der Kraftstoffhochdruckpumpe (13) eine erste Kupplung (15) angeordnet ist,
- dass das zweite Übertragungsmittel (12) zwischen der Trennkupplung (6) und der Brennkraftmaschine (3) angeordnet ist und zwischen dem zweiten Übertragungsmittel (12) und der Kraftstoffhochdruckpumpe (13) eine zweite Kupplung (16) angeordnet ist und
die erste und die zweite Kupplung (15, 16) über eine Steuereinrichtung (18) angesteuert werden, wobei die Kraftstoffhochdruckpumpe (13) wahlweise über den alternativen Antrieb (4) und/oder über die Brennkraftmaschine (3) angetrieben wird.

11. Verfahren nach Anspruch 8 oder 9, **dadurch gekennzeichnet, dass** die Antriebsanordnung (1) ein Übertragungsmittel (111) aufweist, dass das Übertragungsmittel (111) zwischen der Trennkupplung (6) und dem alternativen Antrieb (4) angeordnet ist und zwischen dem Übertragungsmittel (111) und der Kraftstoffhochdruckpumpe (13) eine Kupplung (115) angeordnet ist und die Kupplung (115) über eine Steuereinrichtung (18) angesteuert wird, wobei die Kraftstoffhochdruckpumpe (13) wahlweise über den alternativen Antrieb (4) und/oder über die Brennkraftmaschine (3) angetrieben wird.

12. Verfahren nach Anspruch 8 oder 9, **dadurch gekennzeichnet, dass** die Antriebsanordnung (1) ein Übertragungsmittel (211) aufweist, wobei das Übertragungsmittel (211) zwischen der Trennkupplung (6) und dem alternativen Antrieb (4) angeordnet ist und die Kraftstoffhochdruckpumpe (13) ständig über den alternativen Antrieb (4) angetrieben wird.
